# EUROPEAN PATENT APPLICATION

(11) **EP 1 408 410 A1**
(43) Date of publication of application: **14.04.2004**
(21) Application number: 02021946.5
(22) Date of filing: 30.09.2002
(51) Int. Cl.: G06F 11/36

(54) **Remote debugging of computer programs**

(71) Applicant: SAP Aktiengesellschaft, 69190 Walldorf (DE)
(72) Inventor: Schmidt, Karsten, 74918 Angelbachtal (DE); Bindewald, Jutta, 74918 Angelbachtal (DE); Schmidt, Axel, 69190 Walldorf (DE); Braemer, Achim, 69120 Heidelberg (DE); Rohland, Hans-Christoph, 68789 St. Leon-Rot (DE)
(74) Representative: Schiuma, Daniele Wolfgang

(57) **Abstract**

A computer implemented method for debugging a computer system, with the steps of identifying source code run a target virtual machine, loading the identified source code in a debugging system, attaching the debugging system to the target virtual machine by establishing a communication link between two routers separated by one firewall, retrieving the identified source code into the debugging system from a source within the area shielded by the firewall, comparing the identified code run on the target virtual machine with source code present in the debugging system to establish delta information, and retrieving the delta information from the target virtual machine to the debugging system.

## Description

The invention relates to a method and a system for debugging computer applications.

Debugging of computer programs can be performed by a debugging system that connects with the actual running application program. The debugging system can for example be off site, i.e. physically remote from the system running the application program. The communication between the application computer and the debugger typically goes over computer networks and other communication links; this poses significant security risks. A goal of the invention is to provide for a system and method for remote debugging that reduces security risks. Therefore the invention provides for a method according to claim 1. The invention further relates to a system according to claim 8, and a program storage device according to claim 10.

Further embodiments of the invention are the subject of the dependent claims.
Further objects, aspects and advantages of the invention will be better understood from the following detailed description of a preferred embodiment of the invention with reference to the drawings, in which:
Fig. 1 shows schematically the Java platform debugger architecture, and
Fig. 2 shows schematically an implementation of a system according to the invention.

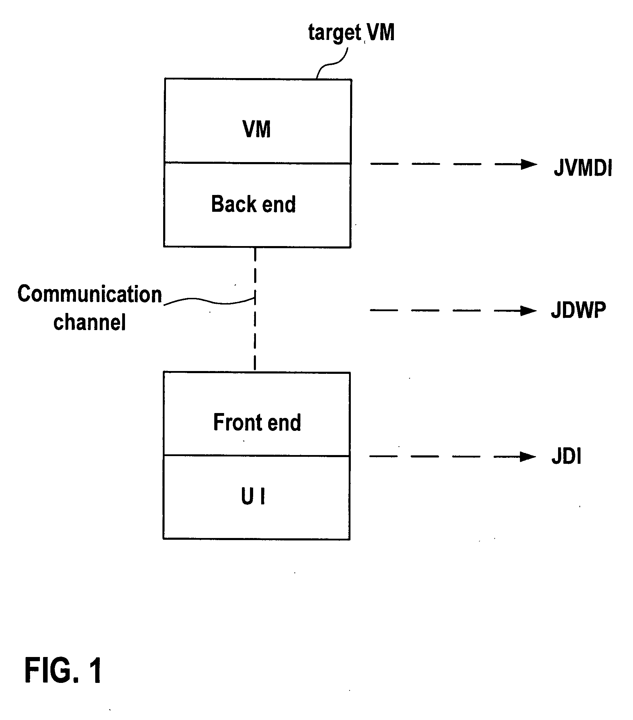

Computer applications written in the Java language can be debugged using the Java Platform Debugger Architecture (JPDA). JPDA is a multi-tiered debugging architecture that allows debugger applications to run portably across platforms, virtual machine (VM) implementations and Software Development Kit (SDK) versions. As shown in Fig. 1 the JPDA comprises three layers, which are:
- Java VM Debug Interface (JVMDI), which defines the debugging services a VM provides,
- Java Debug Wire Protocol (JDWP), which defines the communication between a debuggee and debugger processes, and
- Java Debug Interface (JDI), which defines a high-level Java language interface for remote debugger applications.

The debuggee is the process being debugged; it consists of the application being debugged, with the target VM running the application and the back-end of the debugger. Note that with respect to the JVMDI it is necessary that for debugging the target VM runs in debugging mode, i.e. in the mode that provides the debugging services, and that the VM implements the JVMDI.

The back-end of the debugger communicates requests from the debugger front-end to the target VM and communicates the response to these requests (including desired events) to the front-end. The back-end communicates with the front-end over a communications channel using the Java Debug Wire Protocol (JDWP). The back-end communicates with the target VM using the Java Virtual Machine Debug Interface (JVMDI). Typically the back-end is native code, and the JVMDI is a pure native interface to prevent that the debuggee and the debugger support code contend in ways that cause hangs and other undesired behavior.

The debugger front-end implements the high-level Java Debug Interface (JDI). The front-end uses the information from the low-level Java Debug Wire Protocol (JDWP) to process the communication stream between the debugger and the debuggee. The user interface (UI) to the debugger can be any interface, such as for example a graphical user interface (GUI), and can be for example be implemented as clients of the Java Debug Interface (JDI).

The Java Debug Wire Protocol (JDWP) specifies the format and semantics of the serialized bit-stream flowing over the communication channel between a debuggee and a debugger with respect to the debugging information and requests. Note that the channel runs between the front-end (in the debugger process) and the back-end (in the debuggee process). In the reference implementation of JPDA, the reference implementation of the back-end provides the debuggee side of this channel, and the reference implementation of the front-end provides the debugger side. The front end is a Java programming language component of the Java 2 Standard Edition Software Development Kit (J2SE SDK), located in the tools.jar program collection provided with the SDK. The implementation of the transport mechanism according to the JDWP can be made using any suitable method; possible mechanisms include sockets, serial lines, and shared memory.

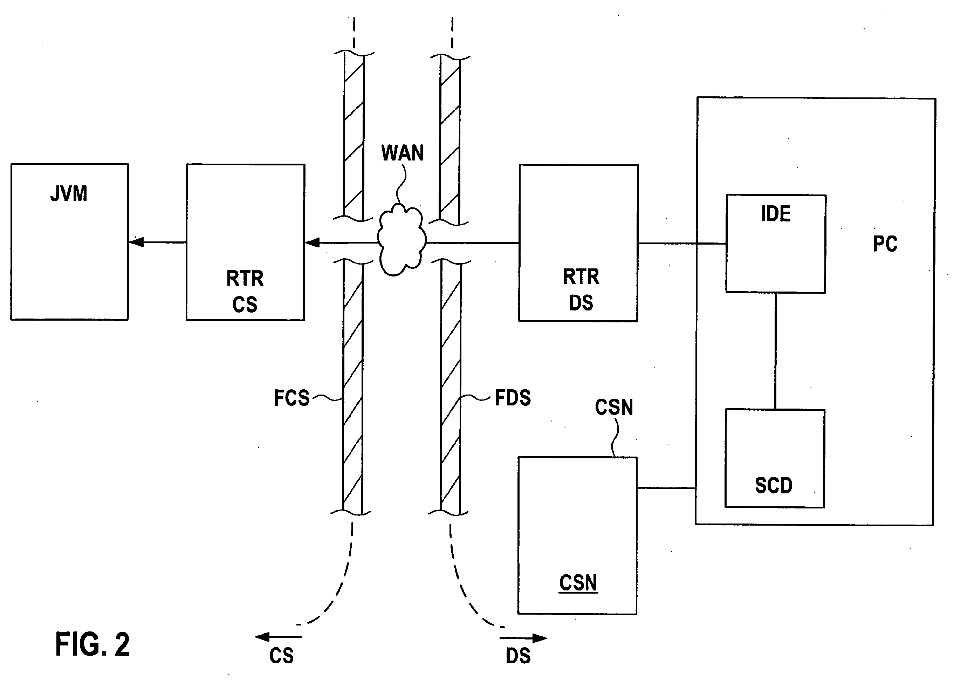

In fig. 2 an implementation of a system 1 according to the invention is shown schematically. The system shown is a computer landscape, which in this simple example of an implementation of the invention comprises two sites, a customer site (indicated by the arrow CS) and a debugging site (indicated by the arrow DS). Typically at the customer site an application is run as part of a productive system, whereas at the debugging site debugging systems are run operated by for example help desk staff and developers. The sites CS and DS are each protected by a firewall, respectively firewalls FCS and FDS. Such firewalls per se are known in the art, and can be implemented using any suitable method. The connection between the sites CS and DS can be any suitable known connection , for example a WAN (wide area network) or a LAN (local area network).
The system on the CS side comprises a client or target computer system that is running a Java application using a VM. For debugging the target VM is run in debugging mode, as is required by the Java specification. The target computer system is provided with a router RTRCS, which is located within the firewall of the CS system side. The router is connected through a communication link, such as for example the Internet, to a router RTRDS on the debugging site.

The debugging system is in this example implemented as a computer system PC (such as a personal computer) running a Java dedicated integrated development environment (IDE), such as for example JBuilder made by Borland. The IDE runs the front end of the Java Debug Interface (JDI) as well as the user interface (UI) of the JDI. Note that in de case of JBuilder the UI is a graphics based, but the invention is not limited to this example; any suitable type of user interface can be used. The PC is further provided with access to a source code repository SCD, from which source code can be loaded into the IDE for use during debugging.

In use, an error message regarding an application running on a VM is reported from the CS site by the user of the application to a help desk on the DS site or any other error message collection point, such as for example the computer based CSN system of SAP AG. The error message is then transferred to an operator who takes care of the resolution of the error or the debugging of the application. The operator uses the computer system PC on which a debugging application is running, for example within the IDE. In the shown example the debugging application is provided with a user interface (for interaction with the operator) and the front-end of the Java Debug Interface (JDI). The debug system makes contact with the target VM to be debugged by using the routers on the debug side and the target side.

The IDE is provided with the source code as run by the target virtual machine to assist with the debugging. In one embodiment of the invention a copy of the source code is stored in the IDE, loaded into the IDE or provided in any other method from a source from within the debugger system inside the firewall FDS. The identification of the code to be debugged on the target VM can be derived from an identification mark provided with or associated with the source code, such as for example a timestamp provided by a software component delivery system. The identification mark can then be communicated from the CS system to the DS system, for example by verbal communication, email or otherwise electronically. In one embodiment of the invention the debugger application retrieves the identification mark from the target VM via the communication link. The identification mark provides the data on which the corresponding code is retrieved and loaded into the IDE. In particular in the case that no modifications have been made to the code as supplied to the target VM this has the advantage of reduced information exchange.

In one embodiment of the invention, the debugging system checks whether a copy of the to be debugged code is present on the debug site based on the identification mark retrieved. If no corresponding code is found, a copy of the code is retrieved from the CS. In one embodiment the changes between code stored on the DS side and code stored on the CS side are determined; only the delta information between the respective codes is transferred, thus reducing transfer costs, in particular when few changes in the code have been made on the CS side. The code present on the DS side is altered using the delta information to yield the code present on the target VM, which altered code is then loaded into the IDE. The altered code can also be achieved on the DS side, and a new identification mark established and stored with the code.

The debugging router communicates with the outside world through at least one firewall FDS. Establishing a communication link between the routers (and therefore through both firewalls) is known in the art, and is for example used in the R/3 system of the integrated business solution mySAP.com made by SAP AG. Within the Java environment it is required that the target VM runs in debug mode, so as to allow the debug application to attach to the VM.

Although in the described example of an embodiment, a Java environment is used, the invention is not limited to such an implementation. The invention can also be used with any other environment which supports virtual machines (VM). Note that in a Java environment the Java VM has be run in debugging mode to allow a debugger to attach to the target VM; however, depending on the environment used, a special mode of the VM might not be required for a debugging process to attach to the VM. The invention therefore relates to any debugging system that can attach in any way to a running VM.

The invention further relates to a program storage device readable by a computer system, embodying a program of instructions executable by the computer system to perform any method according to the invention. As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

## Claims

1. A computer implemented method for debugging a computer system, comprising
identifying source code run a target virtual machine,
loading said identified source code in a debugging system,
attaching the debugging system to the target virtual machine by establishing a communication link between at least two routers separated by at least one firewall.

2. A method according to claim 1, further comprising
retrieving the identified source code into the debugging system from a source within the area shielded by the at least one firewall.

3. A method according to claim 1, further comprising
comparing the identified code run on said target virtual machine with source code present in the debugging system to establish delta information, and
retrieving the delta information from the target virtual machine to the debugging system.

4. A method according to claim 1, further comprising
identifying the source code by means of an identification mark associated with the source code.

5. A method according to claim 4, further comprising
wherein the identification mark is provided as a timestamp.

6. A method according to claim 4, further comprising
providing the identification mark by means of software delivery system.

7. A method according to any of the preceding claims, wherein the target virtual machine is a Java virtual machine.

8. A computer system comprising
a target virtual machine provided with a first router,
a debugging system for debugging the target virtual machine, provided with a second router, and
at least one firewall between said first and second router.

9. A system according to claim 8, wherein the target virtual machine is a Java virtual machine.

10. A program storage device readable by a computer system, embodying a program of instructions executable by the computer system to perform a method according to any of claims 1-7.
